# EUROPEAN PATENT APPLICATION

(11) **EP 2 696 459 A1**
(43) Date of publication of application: **12.02.2014**
(21) Application number: 12768192.2
(22) Date of filing: 28.03.2012
(51) Int. Cl.: H02G 5/06, H02B 13/02, H02B 13/055, H05F 1/02

(54) **HERMETICALLY SEALED SWITCHGEAR**

(30) Priority: 01.04.2011 JP 2011082295
(71) Applicant: Kabushiki Kaisha Toshiba, Minato-ku Tokyo 105-8001 (JP)
(72) Inventor: NOJIMA, Kenichi, Minato-Ku, Tokyo (JP); YASUOKA, Takanori, Minato-Ku, Tokyo (JP); ISHIWATA, Yutaka, Minato-Ku, Tokyo (JP)
(74) Representative: Lind, Urban Arvid Oskar
(86) International application number: PCT/JP2012/002141
(87) International publication number: WO 2012/137444

(57) **Abstract**

The surface of the high-voltage conductor (1) is coated with a resistive coating (12) having resistance properties. The resistive coating (12) is made of a material powder having resistance characteristics or made of resin that is mixed with such material: the volumetric resistivity thereof is at least 1E7Ω · cm but less than 1E11Ω · cm.

## Description

### [Field]

An embodiment of the present invention relates to enclosed switchgear aiming at improved insulation performance.

### [Background]

Typically, for gas insulated switchgear or the like an enclosed switchgear is adopted. In gas insulated switchgear, a high-voltage conductor is accommodated in a sealed enclosure (a sealed container or a sealed vessel) and insulating gas is sealed therein. Since it is desired to reduce the cost and environmental load of enclosed switchgear, miniaturization of the equipment is aimed at. Accordingly, progress is being made in increasing the compactness of enclosed switchgear by for example optimizing the insulation design and integrating the three phases.

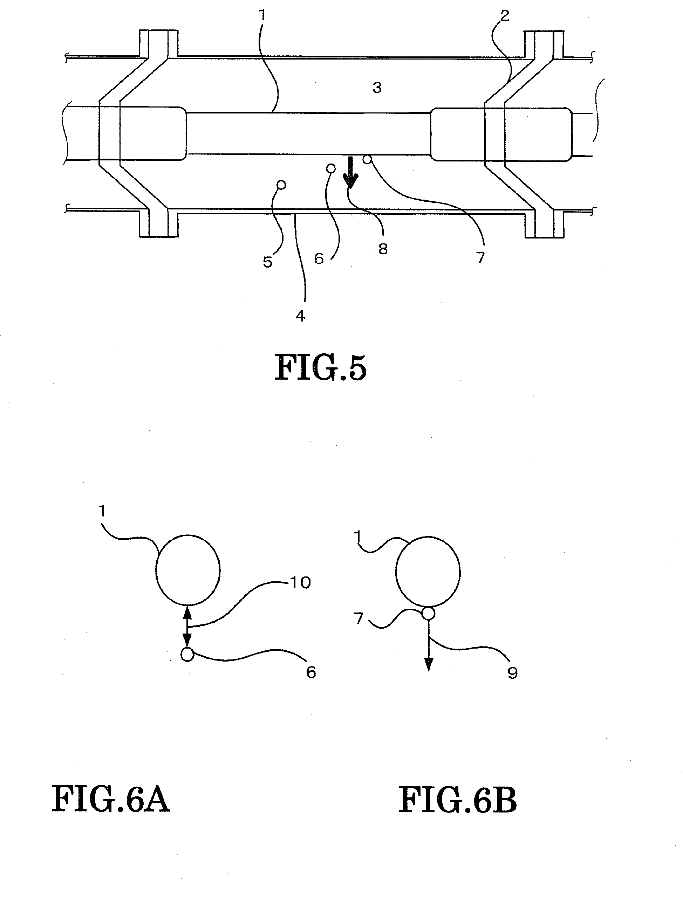

However, the size of the enclosure of enclosed switchgear is basically determined in accordance with insulation and thermal design. One of the focuses of study when determining insulation design is the degree of influence of adventitious presence of metallic powder in the sealed enclosure on insulation performance. A concrete description of this aspect will now begin with reference to FIG. 5 and FIG. 6.

As shown in FIG. 5, a high-voltage conductor 1 is supported by an insulator 2 within the sealed enclosure 4 and insulating gas 3 is sealed therein. Of course, when manufacturing such enclosed switchgear, a management process is conducted to avoid the presence of fine metallic powder in the interior of the sealed enclosure 4, but it is necessary to perform the insulation design process taking into account the possibility of adventitious presence of such fine metallic dust particles 5 (fine metallic powder 5) in the sealing enclosure 4.

If fine metallic dust particles 5 (fine metallic powder 5) are present in the sealed enclosure 4, this fine metallic dust particles 5 become suspended in the insulating gas 3 when this gas is sealed into the sealed enclosure 4. After some time in the vicinity of the high-voltage conductor 1, some of these fine metallic dust particles 5 suspended in the sealed enclosure 4 continue to be suspended, but some of these fine metallic dust particles 5 are attached onto the high-voltage conductor 1. In this specification, the former will be termed nearby metallic powder 6 (sometimes called nearby metallic dust powder 6), while the latter will be termed attached metallic powder 7 (sometimes called attached metallic dust particles 7).

The presence of such nearby metallic dust powder 6 (nearby metallic powder 6) or attached metallic dust particles 7 (attached metallic powder 7) is a factor that affects insulation performance. Specifically, as shown in FIG. 6A, due to the presence of nearby metallic powder 6, a minute gap 10 is constituted between this and the high-voltage conductor 1. If in this condition high voltage such as lightning impulse voltage is applied, insulation breakdown of this minute gap 10 occurs, with the risk that this may initiate insulation breakdown between the high-voltage conductor 1 and the sealed enclosure 4.

Also, as shown in FIG. 6B, attached metallic dust particles 7 generate local electric field enhancement 9 on the high-voltage conductor 1. If in this condition in which a local electric field enhancement has been produced high voltage such as lightning impulse voltage is applied, there is a risk that the locally concentrated electrical field 9 may exceed the breakdown electric field of the insulating gas 3, likewise causing insulation breakdown.

Since, as described above, nearby metallic dust particles 6 or attached metallic dust particles 7 may generate insulation breakdown, the presence of such metallic dust particles 6, 7 constitutes a limiting condition in respect of insulation design. It is therefore demanded that insulation design should be performed in such a way that there is no effect on voltage-withstanding ability even if nearby metallic dust particles 6 or attached metallic dust particles 7 are present. One method of meeting this demand that has been considered is to suppress the surface electric field 8 of the high-voltage conductor 1.

However, the intensity of the surface electric field 8 depends on the distance between the high-voltage conductor 1 and the inside face of the sealed enclosure 4, so in order to lower the intensity of the surface electric field 8 the distance between the high-voltage conductor 1 and the inside face of the sealed enclosure 4 must be increased. In other words, the existence of nearby metallic dust particles 6 or attached metallic dust particles 7 is a factor tending to increase the dimensions of the sealed enclosure 4.

Consequently, it is sought to avoid the effect of nearby metallic dust particles 6 or attached metallic dust particles 7 on insulation performance while yet achieving compactness of the sealed enclosure 4 (in other words, while raising the intensity of the surface electric field 8 of the high-voltage conductor 1). Specifically, alleviation of the restriction on insulation design caused by the metallic dust particles 6 or 7 is demanded: a specific technique that has been proposed is to suppress the initial supply of electrons from the surface of the high-voltage conductor 1, which is necessary for initiation of discharge.

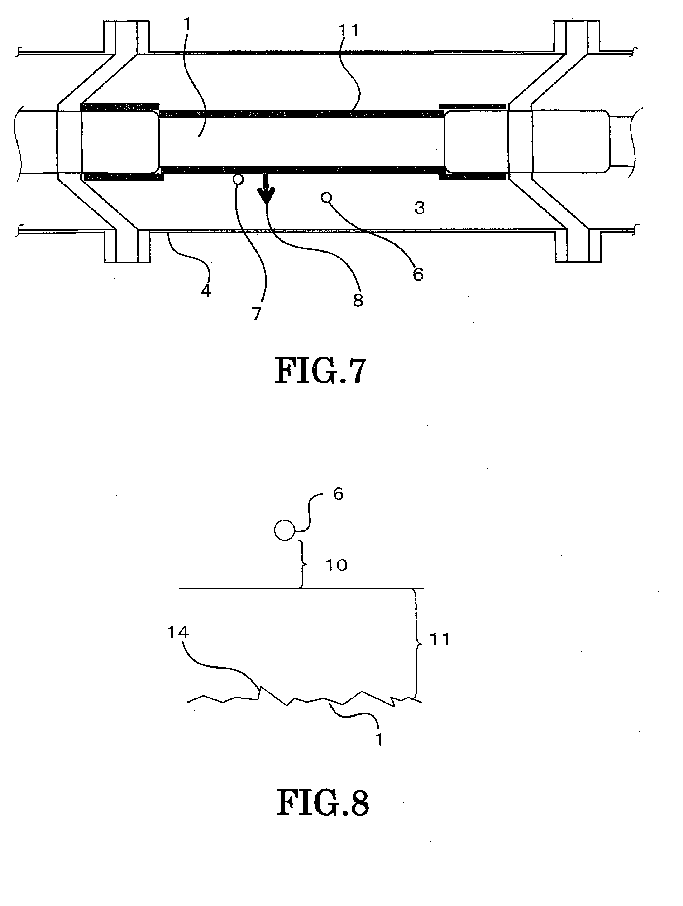

As a technique for suppressing the initial supply of electrons from the surface of the high-voltage conductor 1, the technique of insulation coating of the high-voltage conductor has been proposed. An example is to be found in laid-open Japanese Patent Publication No. Tokkai 2004-40970 (hereinafter referred to as Patent Reference 1). This insulation coating technique will be described with reference to FIG. 7. In the case of the enclosed switchgear shown in FIG. 7, an insulating coating 11 of epoxy or the like is applied to the outer surface of the high-voltage conductor 1.

As shown in FIG. 8, sharp irregularities (concavity and convexity) 14 of micron order (micron scale) are formed at the surface of the high-voltage conductor 1 of the enclosed switchgear, but these irregularities 14 are covered by the insulating coating 11. In this way, the initial supply of electrons, which is necessary for discharge from the surface of the high-voltage conductor 1 into the insulating gas 3 can be suppressed.

Consequently, even if a nearby metallic dust particle 6 drifts into the vicinity of the high-voltage conductor 1 during application of high voltage such as lightning impulse voltage, discharge across the minute gap 10 between the high-voltage conductor 1 and the suspended nearby metallic dust particle 6 can be prevented. Also, even if attached metallic dust particles 7 are present on the high-voltage conductor 1, occurrence of insulation breakdown can be prevented by suppressing initial supply of electrons from the surface of the high-voltage conductor 1.

As described above, in the enclosed switchgear shown in FIG. 7, initial electron electric field emission from the surface of the high-voltage conductor 1 can be suppressed by coating the surface of the high-voltage conductor 1 with an insulating coating 11. In this way, compactness of the sealed enclosure 4 can be achieved by raising the surface electric field 8 of the high-voltage conductor 1.

### [Prior art references]

### [Patent References]

### [Patent Reference 1]

Laid-open Japanese Patent Application No. 2004-40970

### [Outline of the invention]

### [Problem that the invention is intended to solve]

However, the following problems have been pointed out regarding the technique of applying an insulating coating to the high-voltage conductor as in the prior art. Specifically, when the surface of the insulating coating 11 is charged up, since the coating 11 itself is insulator, an extraordinarily long time is required for the accumulated charge to be dissipated by leaking to the high-voltage conductor 1. The accumulated charge generates a DC electric field, so the insulating coating 11 has a strong dust-collecting ability. Consequently, when the insulating coating 11 is charged, fine metallic dust particles 5 are readily attached on the surface of this insulating coating 11.

Also, similar concerns apply when the fine metallic dust particles 5 are charged up. Specifically, since the fine metallic dust particles 5 are easily charged up by friction with for example the insulating gas 3, and furthermore are of light weight, they are easily displaced by the electric field generated by application of AC voltage. Consequently, when the fine metallic dust particles 5 drift into the vicinity of the high-voltage conductor 1, there is a high probability that they will reach and adhere to the high-voltage conductor 1 by being displaced by the AC voltage.

Even if fine metallic dust particles 5 are attached on the surface of the high-voltage conductor 1, if the charged polarity of the fine metallic dust particles 5 is the same as the polarity of the voltage applied by the AC to the high-voltage conductor 1, there is no possibility that the fine metallic dust particles 5 will be accumulated on the surface of the insulating coating 11. The reason for this is that in this case an electrostatic force acts in the direction separating the fine metallic dust particles 5 from the high-voltage conductor 1.

However, in the case of the insulating coating 11, the charged polarity of the fine metallic dust particles 5 is that of the accumulated charge, and so is maintained fixed for a long time. As a result, the charged polarity of the fine metallic dust particles 5 and the polarity of the voltage that is applied by the AC to the high-voltage conductor 1 are often different, so an electrostatic action is exerted on the fine metallic dust particles 5 in the direction such as to attract these to the surface of the insulating coating 11. Consequently, fine metallic dust particles 5 tend to accumulate at the surface of the insulating coating 11.

Thus most of these fine metallic dust particles 5 become nearby metallic dust particles 6 or attached metallic dust particles 7 and represent a factor causing an increase in the dimensions of the sealed enclosure 4. Since, as mentioned above, these nearby metallic dust particles 6 or attached metallic dust particles 7 represent a limiting condition on insulation design, it is desirable to avoid generation of such nearby metallic dust particles 6 or attached metallic dust particles 7. The challenge was therefore not only to suppress initial generation of electrons emitted from the surface of the high-voltage conductor 1 in order to secure excellent insulation reliability and reduction in the overall dimensions of the enclosed switchgear, but also to reliably prevent accumulation of fine metallic dust particles 5 on the surface of the high-voltage conductor 1.

The present embodiment of the invention has the object of solving the above problems and of providing an enclosed switchgear of high insulation reliability and which is also compact, by preventing accumulation of fine metallic particles present at the surface of the high-voltage conductor at the surface of this high-voltage conductor or in the vicinity thereof, and suppressing initial supply of electrons from the high-voltage conductor surface, which is necessary for generation of insulation breakdown.

### [Means for solving the problem]

In order to achieve the above object, an embodiment of the present invention is constituted as follows. Specifically, enclosed switchgear in which a high-voltage conductor is sealed, supported by an insulator, in the interior of an enclosure in which insulating gas sealed, is characterized in that a resistive coating is provided having resistive properties (characteristics) at the surface of the high-voltage conductor.

### [Brief description of the drawings]

FIG. 1 is a cross-sectional view of a first embodiment according to the present invention;
FIG. 2 is a detail cross-sectional view given in explanation of the action/technical effect of the first embodiment;
FIG. 3 is a detail cross-sectional view given in explanation of the action/technical effect of the first embodiment;
FIG. 4 is a cross-sectional view of a second embodiment according to the present invention;
FIG. 5 is a cross-sectional view of prior art enclosed switchgear;
FIG. 6A is a diagram of the case where nearby metallic dust particles are present;
FIG. 6B is a diagram of the case where attached metallic dust particles are present;
FIG. 7 is a cross-sectional view of enclosed switchgear provided with an insulating coating; and
FIG. 8 is a detail cross-sectional view of enclosed switchgear provided with an insulating coating.

### [Detailed description]

An embodiment according to the present invention is described below with reference to the drawings. Members that are identical with the prior art example shown in FIG. 5 and FIG. 7 are given the same reference symbols and further description thereof is dispensed with.

### (First embodiment)

### [Construction]

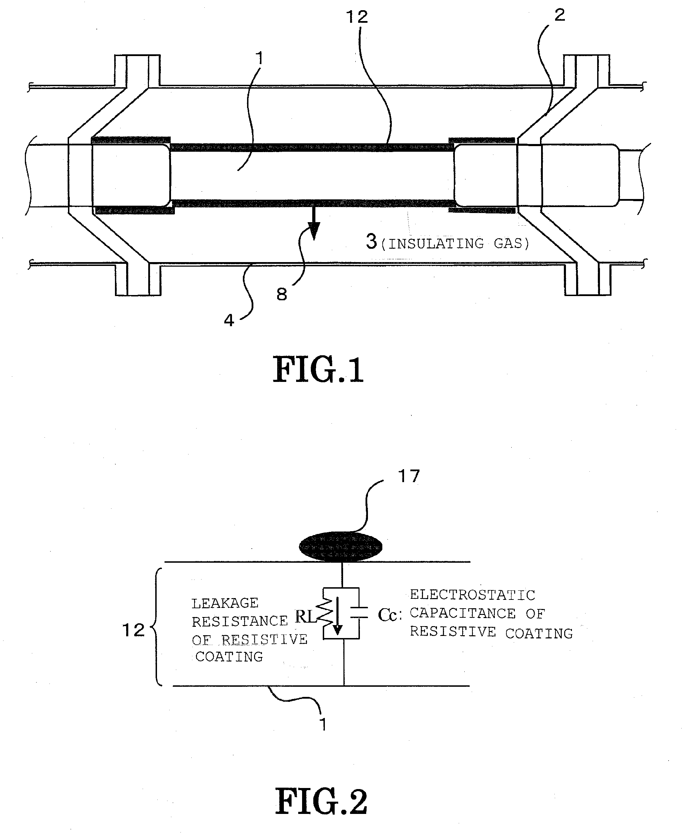

A first embodiment according to the present invention will be described with reference to FIG. 1 to FIG. 3. As shown in FIG. 1, in a first embodiment according to the present invention, a resistive coating 12 having resistive properties (characteristics) is applied as a coating to the surface of the high-voltage conductor 1. The resistive coating 12 is constituted of powder of a material having resistive properties, or of resin mixed therewith. Also, the volumetric resistivity of the resistive coating 12 is set as at least 1E7Ω · cm and less than 1E11Ω · cm.

### [Action/technical effects]

With the first embodiment having a construction as above, as shown in FIG. 2, even assuming that the resistive coating 12 were to be charged up, such accumulated charge 17 can be made to leak away in a comparatively short time through the leakage resistance RL of the resistive coating 12. In other words, the resistive coating 12 can attenuate the DC electric field in a short time and so can reduce the dust-attracting effect. Consequently, fine metallic dust particles 5 do not readily collect on the surface of the resistive coating 12 and, even if fine metallic dust particles 5 were to drift to the vicinity of the resistive coating 12, there is no possibility that such fine metallic dust particles 5 could be attached on the surface of the resistive coating 12.

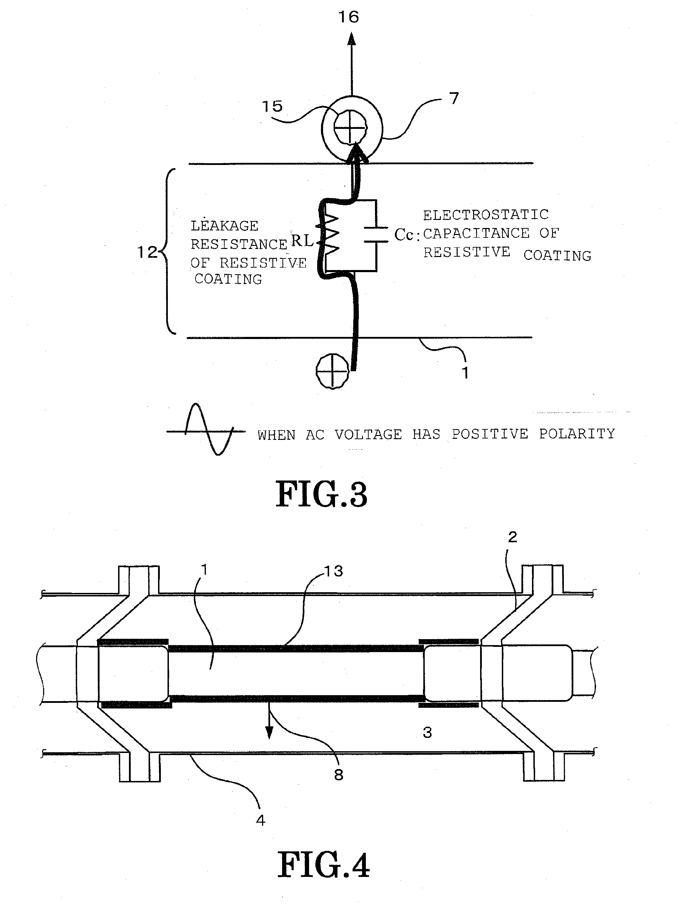

Also, since the time constant of the resistive coating 12 having a volumetric resistivity as referred to above is shorter than the time constant of polarity change of the AC voltage, even if fine metallic dust particles 5 were to be attached on the resistive coating 12, as shown in FIG. 3, the charged polarity of the metallic dust particles 5 would readily tend to become the same as the polarity of the AC voltage applied to the high-voltage conductor 1. Consequently, the electrostatic force 16 acting on the metallic dust particles 5 can be made to be in the direction whereby the metallic dust particles separate from the periphery of the high-voltage conductor 1 (i.e. the upwards direction in FIG. 3), so that, even if such fine metallic dust particles 5 have been attached on the resistive coating 12, these metallic dust particles 5 easily separate from the high-voltage conductor 1.

On the other hand, if high voltage such as lightning impulse voltage is applied to the high-voltage conductor 1, since the time constant of the resistive coating 12 is longer than the continuance time of the lightning impulse, the resistive coating 12 acts as an insulating coating. Consequently, initial electric field emission of electrons from the surface of the high-voltage conductor 1 can be suppressed, making it possible to prevent discharge from the surface of the high-voltage conductor 1 into the insulating gas and so making it possible to reliably prevent insulation breakdown.

Also, in the first embodiment, the resistive coating 12 replacing the insulating coating 11 of the prior art example as shown in FIG. 8 covers surface irregularities 14 of micron order of the surface of the high-voltage conductor 1. Consequently, initial supply of electrons from the surface of the high-voltage conductor 1 can be suppressed. As a result, discharge of the minute gap 10 between the high-voltage conductor 1 and drifting metallic dust particles 5 can be reliably prevented.

As described above, with this first embodiment, supply of initial electrons from the surface of the high-voltage conductor 1 is prevented by the resistive coating 12 and even if the resistive coating 12 or fine metallic dust particles 5 were to become charged, due to the presence of the resistive coating 12, the fine metallic dust particles 5 would be prevented from being attached on the surface.

Consequently, even if fine metallic dust particles 5 are present in the enclosed switchgear 4, such metallic dust particles 5 can only rarely become nearby metallic dust particles 6 or attached metallic dust particles 7, and so effects on the insulating performance by the metallic dust particles 6 or 7 can be avoided. As a result, the surface electric field 8 of the high-voltage conductor 1 can be made high and compactness of the enclosed switchgear 4 can be promoted without difficulty.

Specifically, it is possible to alleviate the restrictive conditions on insulation design imposed by the metallic dust particles 6, 7 etc and thus to set the designed electric field at the surface of the high-voltage conductor 1 at a higher level. In this way, it becomes possible to achieve rationalization of the insulation design and reduction in the overall size of the device, contributing to improved insulation reliability.

### (Second embodiment)

### [Construction]

Next, a second embodiment will be described with reference to FIG. 4. As shown in FIG. 4, the second embodiment is characterized in that the resistive coating 12 shown in FIG. 1 is constituted of a Diamond-like Carbon coating (hereinafter referred to as a DLC coating) 13.

### [Action/technical effects]

The second embodiment constructed as above, in addition to the action/technical effects possessed by the first embodiment described above, has its own action/technical effects as follows. Specifically, the lubricating properties or exfoliation properties of the coating surface of the DLC coating 13 that is employed as the resistive coating 12 in this second embodiment are extremely advantageous.

Consequently, even if fine metallic dust particles 5 drift into the vicinity of the high-voltage conductor 1 and are attached on the DLC coating 13, such particles will slide off the DLC coating 13 and do not dwell thereon. Consequently, the dwell time of the fine metallic dust particles 5 on the DLC coating 13 can be greatly shortened, making it possible to reliably avoid any effect of the fine metallic dust particles 5 on insulation performance.

Also, since the volumetric resistivity of the DLC coating 13 can easily be varied, the desired volumetric resistivity can easily be obtained. As a result, it is easily possible to make the charged polarity of any fine metallic dust particles 5 that are attached on the resistive coating 12 the same as the polarity of the AC voltage applied to the high-voltage conductor 1, and thus to remove such fine metallic dust particles from the vicinity of the high-voltage conductor 1. In other words, fine metallic dust particles 5 cannot be attached onto the surface of the high-voltage conductor 1 or dwell in the vicinity thereof: thus the surface electric field 8 of the high-voltage conductor 1 can be made higher, making possible further improvement in compactness and insulation reliability.

### (Other embodiments)

While various embodiments of the present invention have been described in the above specification, these embodiments are presented merely by way of example and are not intended to restrict the scope of the invention. These embodiments can be put into practice in various other modes and various omissions or substitutions or alterations can be made within a range that does not depart from the scope of the invention. Such embodiments or modifications thereof are included in the scope or gist of the invention and are likewise included in the invention as set forth in the patent claims and the scope of equivalents thereof.

### [Possibilities of industrial application]

The present application can be applied for example to enclosed switchgear and the like.

### [Explanation of the reference symbols]

- 1: High-voltage conductor
- 2: Insulator
- 3: Insulating gas
- 4: Enclosure
- 5: Fine metallic dust particles
- 6: Nearby metallic dust particles
- 7: Attached metallic dust particles
- 8: Surface electric field
- 9: Local electric field enhancement
- 10: Minute gap
- 11: Insulating coating
- 12: Resistive coating
- 13: DLC coating
- 14: Surface irregularities on high-voltage conductor
- 15: Charge from high-voltage conductor
- 16: Electrostatic force
- 17: Accumulated charge

## Claims

1. An enclosed switchgear in which a high-voltage conductor supported by insulator, sealed within an enclosure in which insulating gas is sealed, said enclosed switchgear comprising:
a resistive coating made of material having resistance characteristics or made of resin that is mixed with such material, provided on a surface of said high-voltage conductor.

2. The enclosed switchgear according to claim 1,
wherein said resistive coating has a volumetric resistivity of at least 1E7Ω · cm but less than 1E11Ω · cm.

3. The enclosed switchgear according to claim 1 or 2,
wherein said resistive coating is comprised of diamond-like carbon.
